# EUROPEAN PATENT APPLICATION

(11) **EP 3 285 217 A1**
(43) Date of publication of application: **21.02.2018**
(21) Application number: 16306067.6
(22) Date of filing: 18.08.2016
(51) Int. Cl.: G06Q 10/10, G06Q 30/02

(54) **A METHOD FOR PREDICTING THE ENGAGEMENT LEVEL OF A USER OF A USER DEVICE, A RELATED ENGAGEMENT PREDICTION DEVICE AND USER DEVICE**

(71) Applicant: ALCATEL LUCENT, 92100 Boulogne-Billancourt (FR)
(72) Inventor: MATHUR, Akhil, Dublin 2 (IE); KAWSAR, Fahim, 2018 Antwerpen (BE)
(74) Representative: Nokia Bell Patent Attorneys

(57) **Abstract**

The present invention relates to a method, system and related devices for predicting the engagement level of a user of a user device, said user device receiving content for presentation at said user device, wherein said method comprises the steps of capturing at least one context of said user of said user device and capturing at least one context of the environment of said user of said user device, predicting a level of user engagement by processing at least one of said context of said user of said user device captured and said context of the environment of said user of said user device and scheduling the processing of said content received based on said level of user engagement.

## Description

### FIELD OF THE INVENTION

The present invention relates to the field of content delivery in communication systems, and in particular to predicting engagement levels and efficiency in such content delivery in such communication.

### TECHNICAL BACKGROUND OF THE INVENTION

Currently, short messages (i.e. chats or notifications) become the paradigm for future communication systems. Systems like Whatsapp have revolutionized human-human communication using the short message paradigm, and applications such as the Facebook Messenger are extending the same paradigm to human-business communication. As internet of things devices further referred to as IoT devices (e.g. wearables, environment sensors) become more mainstream, it is expected that these devices further as well use the short message paradigm to communicate messages and/or data with end-user devices.

This short message paradigm, albeit user-friendly and popular, presents two pressing problems for the end-users and content providers.

First, a user's available attention in a day is limited - as people are busy with work life, family life, social life; they can only engage with messages (e.g. notifications) from applications further referred to as apps or IoT devices at certain moments (contexts) in a day. For example, a user John may be most receptive to messages after he reaches home from office, whereas another user Mary may like to get messages during her morning commute to work. If the content from these apps/devices is not sent at the right moments, it may disrupt a user's daily routine and is even likely to be ignored altogether by the user (which is of course not ideal for the content provider)

The second issue is that every time a message (e.g. notification) is sent to the user via cellular network, it causes the cellular radio on the UE to wake up, thereby resulting in battery consumption. As the number of short messages increase, this burden on battery life will increase - and it might lead to users uninstalling the apps or disabling short messages from them, both of which are undesirable scenarios for service providers.

Hence, currently there is no means available to identify those moments when a user will is most likely to engage with the content - in order to improve the user experience, content receptivity, and battery life of a user device.
Currently, there are no practical solutions available, which can predict users' engagement levels in advance, and schedule content delivery accordingly.

### SUMMARY OF THE INVENTION

An objective of the present invention is to provide with a method for predicting the engagement level of a user of a user device, a system and related devices, but wherein the aforementioned shortcoming or drawbacks of the known solutions are alleviated or overcome.

Accordingly, embodiments of the present invention relate to a method for predicting the engagement level of a user of a user device (UD), said user device (UD) receiving content for presentation at said user device (UD), wherein said method comprises the steps of:
- capturing at least one context of said user of said user device (UD); and
- capturing at least one context of the environment of said user of said user device (UD); and
- predicting a level of user engagement by processing at least one of said context of said user of said user device (UD) captured and said context of the environment of said user of said user device (UD); and
- scheduling the processing of received said content received based on said level of user engagement.

A further embodiment of the present invention relates to method for predicting the engagement level, wherein said processing of said received content in case said level of user engagement is below a threshold value is storing said received content.

Another further embodiment of the present invention relates to a method for predicting the engagement level, wherein said processing said received content in case said level of user engagement is equal or higher than a threshold value is presenting said received content at said user device of said user.

Still another embodiment of the present invention relates to an Engagement predicting device, for predicting the engagement level of a user of said user device, said user device receiving content for presentation at said user device, wherein said Engagement predicting device, further comprises:
- User context Capturing means, configured to capture at least one context of said user of said user device; and
- Environment context capturing means configured to capture at least one context of the environment of said user of said user device; and
- Engagement predicting means, configured to predict a level of user engagement by processing at least one of said context of said user of said user device captured and said context of the environment of said user of said user device (UD).
Another further embodiment of the present invention relates to a system for predicting the engagement level of a user of a user device, said user device receiving content for presentation at said user device, wherein said system comprises:
- An Engagement predicting device according to claim 4; and ,
- Content delivery scheduling means, configured to schedule the content delivery of said content received based on said level of user engagement.

Still another embodiment of the present invention relates to a User device for predicting the engagement level of a user of said user device, said user device receiving content for presentation at said user device, wherein said user device further comprises an Engagement predicting device according to claim 4.

Still another embodiment of the present invention relates to said User device User device according to claim 6, wherein said user device further comprises a content delivery scheduling means, configured to schedule the content delivery of said content received based on said level of user engagement.

Another embodiment of the present invention relates to an Edge cloud node, for use in system according to claim 5, said edge cloud node being coupled to said user device wherein said Edge cloud node, comprises a content delivery scheduling means, configured to schedule the content delivery of said content received based on said level of user engagement.

In this way, by first capturing at least one context of said user of said user device and additionally capturing at least one context of the environment of said user of said user device, a level of user engagement can be predicted by processing at least one of said context of said user of said user device captured and said context of the environment of said user of said user device and subsequently the processing of said content received is scheduled based on said level of user engagement predicted.

The at least one context of said user of said user device may include but is not limited to, device usage timestamps, duration of device usage sessions, usage duration of various applications on the device, timestamps of outgoing or incoming phone calls, timestamps of notifications received, timestamps of notifications attended, time-stamped sensor data from the user device which may include readings of light sensor, proximity sensor, microphone, accelerometer, and user's physical activity. The captured data may be stored in the Device Context Database.

Further, the at least one context of the environment of said user of said user device may include but is not limited to user's location (indoor vs. outdoor), user's exact or approximate indoor location in a building, number of people in the user's proximity. This information can be obtained by means any state-of-the-art localization techniques or querying a database on a nearby small cell BTS. The captured data may be stored in the Environment Context Database.

Subsequently, a level of user engagement is predicted by processing at least one of the captured context of said user of said user device captured and the captured context of the environment of said user of said user device. The user context data and the environment context data are passed to the engagement prediction means EPM being implemented by a pre-trained machine-learning inference system. The said machine learning inference system may use the raw device and environment context data, or may compute derivatives of the raw data - and then apply a pre-defined machine learning algorithm (e.g. Support Vector Machines, Random Forests, Linear Regression) to generate a score or level of user engagement.

It is to be noted that the present invention is not restricted to any specific machine learning system. The said machine learning system can include any classification or regression model, which is trained offline using device context and environment context data from a large number of users. For training, the system may use 'raw' device and environment context data as input, or compute the derivatives of the raw data as input features of the model. The system may use a variety of ground truths for modelling including, but not limited to, EEG signals from the brain, user surveys. Thereafter, the system applies any commonly available or specially designed machine learning algorithm to map the input data to ground truth.

Further, based on the predicted engagement level of the user of the user device, the scheduling of the processing of any received content is performed. The processing of received content may include the act of storing such received content in a buffer included in, or coupled to the user device, in case the level of user engagement is below a threshold value, where the level of user engagement is below a threshold value means that the user's level of engagement or in other words the user's attention is not present at all or not sufficiently present.

Alternatively, the processing of received content may include the act of rendering or presenting said received content to the user, in case the level of user engagement is equal to, or higher than a certain threshold value, where the level of user engagement is equal to - or higher than threshold value means that the user's level of engagement or in other words the user's attention is presently available or even be high. The presenting of received content may be performed immediately at receipt or in case received content is stored in a buffer when the user engagement changes to above the said threshold value, the content from the buffer can be pushed to the user.

Alternatively, based on the predicted engagement level the rendering or presenting of the received content could be adjusted, in case the level of engagement is equal to, or higher than a certain threshold value, the content may be shown prominently in a larger font, whereas, if the level of engagement is lower than the threshold, the content can be shown in a smaller font on the screen, that is less prominently.

As a further alternative, the predicted engagement level of the user of the user device may be shared with the edge of the mobile network (e.g. edge cloud) periodically. Based on the predicted engagement level of the user of the user device, the scheduling of any content sent to the user device is performed at the edge cloud. In case the level of predicted user engagement is below a threshold value, the edge cloud delays the content delivery to the user device till the time when the user engagement goes above a threshold.

The content may include, but not limited to, notifications from applications sent through a cloud backend or generated locally, audio or video advertisements, messages from smart-phones, IoT or wearable devices in the said user's proximity.

A user is a person who requests and receives content. User engagement is users' involvement with content. A piece of content gets and keeps users' attention and interest when there is user engagement. There could be many users receiving the same content at the same time. However, for each user, viewing or otherwise enjoying content is mostly an individual experience, without much interaction with other users, and with limited engagement with content.

In a further embodiment of the present invention, the processing of said received content in case said level of user engagement is below a threshold value is storing said received content.

In another further embodiment of the present invention said processing of said received content in case said level of user engagement is equal or higher than a threshold value is presenting said received content at said user device of said user.

A further alternative embodiment of the present invention may be that the content delivery scheduling means CSM is located inside an edge cloud node ECN (e.g. a home gateway or a small cell) instead of at the User device. The edge cloud Node ECN periodically may query the EPM on each UE connected to it, and stores the engagement levels of the user in a User Engagement Database.

It is to be noted that the described functional means of the system may be distributed over the first communications device and/or one or more further network elements such as a server device as described in the further appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. This means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Fig. 1 represents a functional representation of a system for predicting the engagement level of a user of a user device according to an embodiment of the present invention; and
Fig. 2 represents the functional structure of an engagement predicting device EPD included in the system for predicting the engagement level of a user of a user device UD according to an embodiment of the present invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

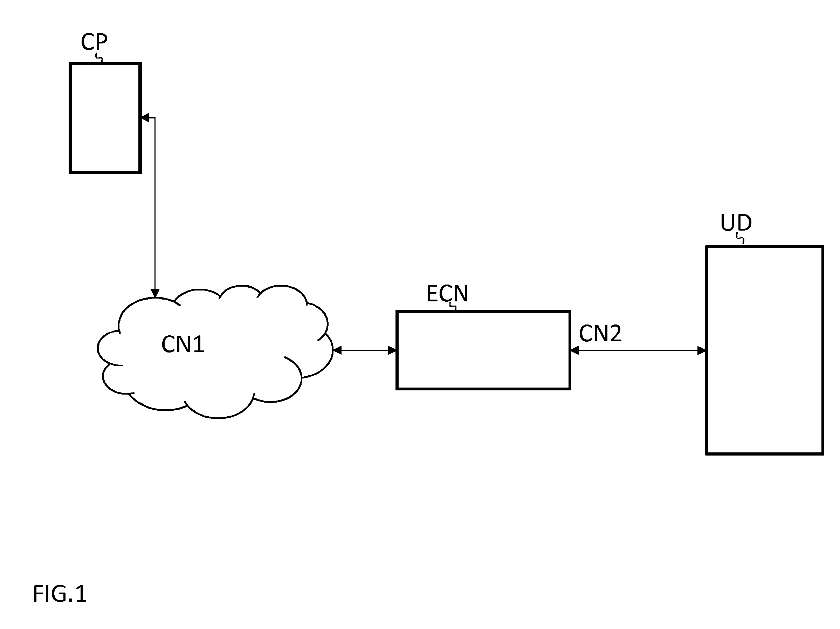

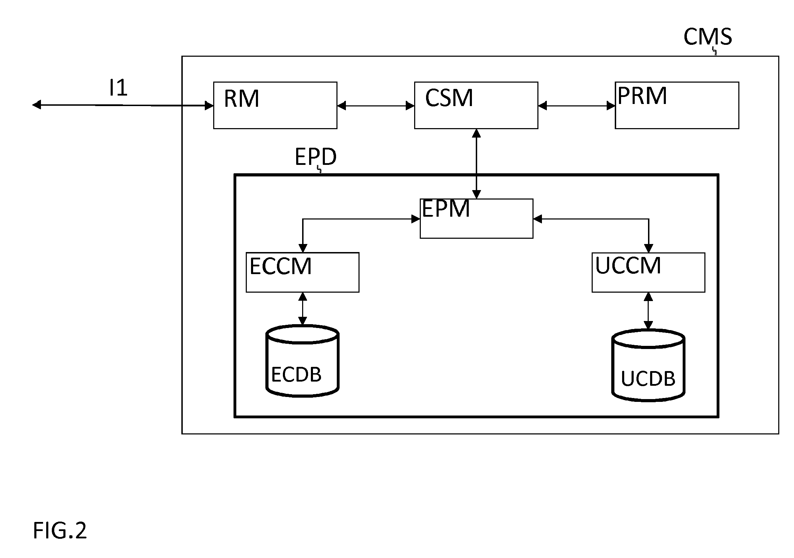

In the following paragraphs, referring to the drawing in FIG.1, an implementation of the system for predicting the engagement level of a user of a user device according to an embodiment of the present invention is described. In a further paragraph, all connections between mentioned elements are defined. Subsequently all relevant functional means of the user device UD and the incorporated engagement prediction device EPD as presented in FIG.2 are described followed by a description of all interconnections.

In the succeeding paragraph the actual execution of the system is described.

A first essential element of the system is a user device UD of a user, where the user device is configured to receive content for presentation at said user device UD to the user of the user device UD. Such user device may be a mobile communications device like a smart-phone, a wearable device like a smart watch or a fitness tracker.

Such content may be forwarded by a content provider CP where such content provider may be an email provider, a social network where the user is subscribed to or an application installed on the user device which receives content through a cloud backend of the application provider.

Further such system may comprise an edge cloud node ECN, being a network element coupled to the user device and that is configured to perform certain tasks instead of the at user device (distributed processing of tasks).

The content provider CP and the edge cloud node ECN may be coupled over a communications network CN1 able to distribute content where such communications network may include an xDSL, xPON, WMAN, LAN, 3G link or other fixed or mobile connection such as Wi-Fi, Bluetooth, GSM, UMTS 4G etc or any other suitable combination of the previous communication networks.

Moreover, the edge cloud node ECN and the user device may be coupled over a communications network CN1 able to distribute content where such communications network may include an xDSL, xPON, WMAN, LAN, 3G link or other fixed or mobile connection such as Wi-Fi, Bluetooth, GSM, UMTS 4G etc or any other suitable combination of the previous communication networks.

A first essential means of a user device UD of an embodiment of the present invention is an engagement predicting device EPD, for predicting the engagement level of a user of said user device UD.

The engagement predicting device EPD further comprises a User context Capturing means UCCM that is configured to capture at least one context of said user of said user device UD. The user context capturing means UCCM is a background service that runs on the User device UD, and captures usage and context data for the individual user.

The engagement predicting device EPD further comprises an environment context capturing means ECCM that is configured to capture at least one context of the environment of said user of said user device UD.

The environment context capturing means ECCM also runs as a background daemon on the User device and logs data about user's environment derived from the properties of the wireless network.

Moreover, the engagement predicting device EPD, comprises a first User Context Database UCDB that is configured to store the data captured by the user capture means UCCM. The user context capture means may capture the at least one context of said user of said user device may include but is not limited to, device usage timestamps, duration of device usage sessions, usage duration of various applications on the device, timestamps of outgoing or incoming phone calls, timestamps of notifications received, timestamps of notifications attended, time stamped sensor data from the user device which may include readings of light sensor, proximity sensor, microphone, accelerometer, and user's physical activity.

Further, the at least one context of the environment of said user of said user device as may be captured by the environment capturing means ECM, may include but is not limited to user's location (indoor vs. outdoor), user's exact or approximate indoor location in a building, number of people in the user's proximity etc. This information can be obtained by means any state-of-the-art localization techniques or query a database on a nearby small cell BTS. The captured data may be stored in the Environment Context Database ECDB.

The engagement predicting device EPD further comprises an Engagement predicting means EDM that is configured to predict a level of user engagement by processing at least one of said context of said user of said user device (UD) captured and said context of the environment of said user of said user device UD.

The Engagement predicting means EDM is configured to execute a machine learning model which uses the data collected from DCL and ECL, extracts relevant features from it, and computes a score for user engagement. The said machine learning model can be trained offline.

The engagement predicting means EPM is coupled to the user context Capturing means UCCM and is further coupled to the environment context capturing means ECCM. The environment context capturing means ECCM further is coupled to the Environment Context Database ECDB. The user context capturing means UCCM is coupled to the user context database UCDB. The engagement predicting means EPM has an input/output terminal that is at the same time an input/output-terminal of the engagement predicting device EPD.

Alternatively, the Environment Context Database ECDB could be located externally to the engagement predicting means EPM or the user device and be located at a remote location (e.g. a home gateway) such that it can be queried by the engagement predicting means EPM to obtain environment context data. Similarly, the User Context Database UCDB may be located externally to the engagement predicting means EPM or the user device and be located at a remote location (e.g. at another user device) from where it can be queried by the engagement predicting means EPM to obtain user context data.

The user device UD may include the engagement predicting means EPM and in addition a reception means RM that is configured to receive content, for instance forwarded by the content provider CP. The reception means RM may additionally be configured to buffer received content. The user device UD further may comprise a Content delivery scheduling means CSM that is configured to schedule the content delivery of said content received based on said level of user engagement as is predicted by means of the engagement prediction means EPM. Further, the user device may include a presenting means PRM that is configured to render or present content to the user of the user device. This presenting means may be the display of the user device ore be alternatively the presenting means may be coupled to an external display connected to the user device over a communication channel such as HDMI, Bluetooth, WiFi etc.

The reception means RM has an input-terminal that is at the same time an input-terminal I1 of the engagement predicting device EPD. The reception means further is coupled to the Content delivery scheduling means CSM that in turn is coupled to the content presenting means PRM and in addition to the engagement prediction device.

It is assumed that e.g. Groupon or any other content provider such as Amazon wants to send an offer to a user on his/her Withings smart watch. In the absence of the present invention, Groupon would send the offer at an arbitrary time and there is no guarantee that the user will engage with their offer.

In case the present invention is applied, the meant Groupon content will be first received by reception means RM which in turn will forward a signal indicating the arrival of new content or forwarding the newly received content it selves to the Content delivery scheduling means CSM which will query the Engagement prediction device EPD find the user's available engagement level. This user's available engagement level is determined based on the user context data as captured by the user context capturing means UCCM and stored in the user context database UCDB and the environment context capturing means ECCM and as stored in the environment context capturing means ECCM . In case the current engagement level is above a certain threshold, the content will be pushed to the presenting means PRM of the user device UD immediately so that the content can be presented to the user immediately.

Otherwise, the content delivery would be deferred to a point when the user has the necessary engagement level. Clearly, this mechanism would improve the chances of user engagement with the content which is a win for the content provider.

Alternatively, the presenting of received content may be performed immediately at receipt or in case received content is stored in a buffer when the user engagement changes to above the said threshold value, the content from the buffer can be pushed from the buffer towards the presenting means PRM of the user device, being the Withings smart watch of the meant user or alternatively the user's smart-phone.

Alternatively, based on the predicted engagement level the rendering or presenting of the received content could be adjusted, in case the level of engagement is equal to, or higher than a certain threshold value, the content may be shown prominently in a larger font, whereas, if the level of engagement is lower than the threshold, the content can be shown in a smaller font on the screen, that is less prominently.

As a further alternative, the predicted engagement level of the user of the user device may be shared with the edge of the mobile network (e.g. edge cloud) periodically. Based on the predicted engagement level of the user of the user device, the scheduling of any content sent to the user device is performed at the edge cloud. In case the level of predicted user engagement is below a threshold value, the edge cloud delays the content delivery to the user device till the time when the user engagement goes above a threshold.

Further, if we assume that the engagement predicting means EPM by means of a pre-trained machine learning model uses a Support Vector Machine algorithm with Radial Kernel (SVM-R) and has determined that the following User Context Features (i.e., timeSinceLastCall, timeSinceLastNotification, battery levels, time of the day) and following Environment Context Features (i.e., location, number of people in said user's proximity) are the most important for predicting the user's engagement levels. This means, by inputting the above mentioned features into the trained SVM-R model, it can return a value for engagement level by applying a non-linear transformation on the input features. For example, the output engagement level could be {High/Low}, {Very High/High/Neutral/Low/Very Low} etc. depending on the thresholds used while the model was trained.

If such a model is applied to predict a user's engagement on a smart watch as the User Device, then the User context Capturing means UCCM, first captures User Context Features (e.g., timeSinceLastCall = 30 minutes, timeSinceLastNotification = 20 minutes, battery level = 80%, time of the day = 12:15) at the given instance when the prediction is to be made. Similarly, the Environment context capturing means ECCM collects the required Environment Context Features (e.g., location = Indoor, number of people in said user's proximity = 5) at the given instance when the prediction is to be made. Both these sets of instantaneous data parameters (User and Environment context) are then passed onto the Engagement predicting means EPM which executes the aforementioned SVM-R model to generate a value for user engagement such as {High/Low}, {Very High/High/Neutral/Low/Very Low} etc. depending on the thresholds defined in the model.

Alternatively, if we assume that the pre-trained machine learning model uses a Linear Regression (LR) algorithm, and has determined that the following User Context Features (i.e., lastHourApplicationUsageDuration, lastHourApplicationCount, battery levels) and following Environment Context Features (i.e., indoor location, number of people in said user's proximity) are the most important for predicting the user's engagement levels. This means, by inputting the above mentioned features into the trained LR model, it can return a value for engagement level by applying a linear transformation on the input features. For example, the output engagement level could be a number ranging between 0 to 100, depending on the model parameters.

If such a model is applied to predict a user's engagement on a smartwatch as the User Device, then the User context Capturing means UCCM, first captures User Context Features (e.g., lastHourApplicationUsageDuration = 5 minutes, lastHourApplicationCount = 10, battery levels = 100%) at the given instance when the prediction is to be made. Similarly, the Environment context capturing means ECCM collects the required Environment Context Features (e.g., indoor location = {x,y}, number of people in said user's proximity = 1) at the given instance when the prediction is to be made.

Both these sets of instantaneous data parameters (User and Environment context) are then passed onto the Engagement predicting means EPM which executes the aforementioned LR model to generate a value for user engagement between 0 - 100. This value can be then be compared by the EPM against a threshold value (t) to determine if it corresponds to high engagement or low engagement.

However, it is to be noted that the engagement predicting means EPM is not limited to just one specific machine learning model but may be implemented by any kind of pre-trained machine learning model which uses user context captured by the user context Capturing means UCCM and/or environment context as captured by the Environment context capturing means (ECCM).

As we will describe below, our invention leverages the knowledge of the existing wireless network around a user, and combine it with various on-device sensors to predict the engagement levels of a user. This knowledge of engagement levels is then utilized by the cellular network or the device to push content to the user at appropriate times.

Whenever a new content arrives at the reception means RM of the User device UD the engagement prediction device EPD would be queried where after the engagement prediction device EPD is to find user's current engagement. If the current engagement is above the expected engagement of the content , the a content delivery scheduling means CSM, will recommend the user device to launch the app, or display the app's icon and message prominently on user's home screen for faster launching, e.g. launching the "Groupon" app.

A further alternative embodiment of the present invention may be that the content delivery scheduling means CSM is located inside an edge cloud node ECN (e.g. a home gateway or a small cell) instead of at the User device. The edge cloud Node ECN periodically may query the EPM on each UE connected to it, and stores the engagement levels of the user in a User Engagement Database. In this embodiment, instead of routing the content from a content provider CP directly to the User device UD, the operator's network instead sends it to the edge cloud, which then schedules the content delivery at a time when the target user has available engagement. This specific embodiment has an additional advantage over the first embodiment in that as the content is first received by the edge cloud node and not by the User device, the wireless radio on the User device UD does not need to wake up for every content receipt. The repeated wake-up of the wireless radio on the User device UD is a major contributor to battery loss. Through the application of the present invention, the edge cloud which is acting as a broker between content provider CP and the User device UD, can send multiple contents to the UE together in a batch, thereby providing gains in battery life of the UE.

In current operating systems, when a notification message is sent to the user, it typically has a priority attached to it. For this embodiment, we assume that the incoming messages also have a field called 'expected engagement' (EE) which indicates how much engagement this content expects from the user. For example, a video content may require a high engagement from the user-whereas a simple text message may require less engagement.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for predicting the engagement level of a user of a user device (UD), said user device (UD) receiving content for presentation at said user device (UD), wherein said method comprises the steps of:
- capturing at least one context of said user of said user device (UD); and
- capturing at least one context of the environment of said user of said user device (UD); and
- predicting a level of user engagement by processing at least one of said context of said user of said user device (UD) captured and said context of the environment of said user of said user device (UD); and
- scheduling the processing of said content received based on said level of user engagement.

2. A method for predicting the engagement level, according to claim 1, wherein said processing of said received content in case said level of user engagement is below a threshold value is storing said received content.

3. A method for predicting the engagement level, according to claim 1, wherein said processing said received content in case said level of user engagement is equal or higher than a threshold value is presenting said received content at said user device (UD) of said user.

4. Engagement predicting device (EPD), for predicting the engagement level of a user of said user device (UD), said user device (UD) receiving content for presentation at said user device (UD), wherein said Engagement predicting device (EPD), further comprises:
- User context Capturing means (UCCM), configured to capture at least one context of said user of said user device (UD); and
- Environment context capturing means (ECCM), configured to capture at least one context of the environment of said user of said user device (UD); and
- Engagement predicting means (EPM), configured to predict a level of user engagement by processing at least one of said context of said user of said user device (UD) captured and said context of the environment of said user of said user device (UD).

5. A system for predicting the engagement level of a user of a user device (UD), said user device (UD) receiving content for presentation at said user device (UD), wherein said system comprises:
- An Engagement predicting device (EPD) according to claim 4; and ,
- Content delivery scheduling means (CSM), configured to schedule processing of said content received based on said level of user engagement.

6. User device for predicting the engagement level of a user of said user device (UD), said user device (UD) receiving content for presentation at said user device (UD), wherein said user device (UD) further comprises:
- An Engagement predicting device (EPD) according to claim 4; and ,

7. User device according to claim 6, wherein said user device (UD) further comprises:
- a content delivery scheduling means (CSM), configured to schedule the processing of said content received based on said level of user engagement.

8. Edge cloud node (ECN), for use in system according to claim 5 , said edge cloud node (ECN) being coupled to said user device (UD) wherein said Edge cloud node (ECN), comprises:
- a content delivery scheduling means (CSM), configured to schedule the content delivery of said content received based on said level of user engagement.
